# EUROPEAN PATENT SPECIFICATION

(11) **EP 0 761 301 B1**
(45) Date of publication and mention of the grant of the patent: **14.11.2001**
(21) Application number: 95306344.3
(22) Date of filing: 11.09.1995
(51) Int. Cl.: B01J 19/30, B01J 19/32

(54) **Folded packing**
Faltbarer Füllkörper
Elément de garnissage pliable

(43) Date of publication of application: 12.03.1997
(60) Divisional application: 00116907.7
(73) Proprietor: LANTEC PRODUCTS, INC., Agoura Hills, CA 91301 (US)
(72) Inventor: Lang, Ko C., Agoura Hills, California 91301 (US)
(74) Representative: Gilmour, David Cedric Franklyn

(56) References cited:
- EP-A- 0 150 900
- EP-A- 0 259 022
- WO-A-95/12451
- DE-A- 1 519 668
- US-A- 4 195 043

## Description

### Technical Field

The present invention relates to fluid contact structures for use in packed towers and, more particularly, this invention relates to elements formed by folding strip material into complex 3-dimensional shapes.

### Background of the Invention

Packed towers are used for mass transfer operations such as absorption, desorption, extraction, scrubbing and the like. The type of packing is chosen for its mechanical strength, resistance to corrosion, cost, capacity and efficiency. The function of the packing is to facilitate mass transfer between two fluid streams, usually moving countercurrent to each other. Efficiency and rate of mass transfer are enhanced by providing large surface area in the packing to facilitate contact of the fluids and by breaking the liquid into very fine droplets to enhance mass transfer to a gas phase.

Packing can be in the form of trays or packing bodies that are randomly packed into a column or tower. Originally, packing elements were ceramic or carbon rings, saddles, partition rings or drip point tiles. More modern packing bodies have a uniform distribution of open cellular units and provide higher efficiency and performance. They have very high wettable surface area and low resistance to fluid flow. They are effective in any orientation. The high efficiency packing bodies can be dump loaded into a column or tower and result in uniform distribution of the packing bodies without having blocked regions or void regions. These packing bodies permit streams to be processed at faster volumetric rates. Efficiency is increased and processing cost is reduced. The high efficiency packing bodies have complex dimensional shapes, usually with numerous struts and projections of different sizes and disposed at different angles and positions throughout the packing body.

However, the intricate structure of the uniform geometric shapes required for the high efficiency packing bodies requires that they be formed by casting, injection molding, stamping or extrusion, all expensive processes. Extrusion processes are limited since they generally are used to form shapes with axial symmetry. Also molding processes forbid the use of shapes such as undercuts and overlapping shapes since they cannot be released from ordinary molds. Multipart molds are prohibitively expensive. Thus, much of the internal volume is open space decreasing effective surface area. Baffle structure perpendicular to the longitudinal axis of the packing body is less than the optimum.

Metal packing bodies or elements are required for certain high temperature or chemically aggressive process streams. Most metal packing bodies are formed from metal blanks rolled into a tubular or spherical shape. Tabs or tongues may be cut and bent toward the interior to provide projections to increase surface area and enhance mixing and droplet formation. Again, there is substantial open area and efficiency is less than desired.

U.S. Patent No. 4,724,593 describes an improved method for manufacturing high performance, symmetrical, open volumed packing bodies. The packing bodies have uniform geometrical configurations and are formed from a wide variety of materials into a wide variety of shapes and geometries. The process is simple and economical. A strip of sheet material has a pattern of repeating plates which are connected by intermediate ribbons of the sheet material. The plates may be perforated or contain projections. The plates are bent perpendicular to the longitudinal axis of the strip. The intermediate ribbons are then bent to bring the longitudinal axis of the bent plates into close proximity and in substantial parallel alignment.

The high performance packing bodies have performed well and have captured a significant share of the market. They have been manufactured in plastic or metal materials. These packings have low pressure drop, high mass transfer and packing efficiency. They have a high population of drip points per volume provided by a uniform distribution of surface elements. An open, non-obstructive structure provides low pressure drop while dispersing and distributing flow in both longitudinal and lateral directions.

While the void volume of the interior structure of the packing body is less than prior high efficiency packing bodies, the structure normal to the longitudinal axis is still difficult to provide and the manufacture requires several bending and rolling operations to form the sheet material into an element.

An improved packing body is disclosed in copending application, Serial No. 08/147,806, filed November 3, 1993. (WO-A-95/12451) The improved packing bodies are also formed from a strip of material. However, the perforated panels are not separated by ribbon connectors. A perforated strip of material is simply rolled into a spiral or into a concentric cylinder structure. The outer curved end of the strip is latched to the curved surface of the preceding revolution of the spiral. Baffle or tab elements disposed transverse to the surface of the strip efficiently disrupt the fluid stream. The tabs can be rod-like elements raised from the surface. The improved packing bodies have a high degree of open space, from 30% to 98%. Surprisingly, the rolled packing bodies are found to provide better mass transfer and efficiency than prior packing body structures.

### Statement Of The Invention

In accordance with the invention a packing body for use in fluid contact comprises in combination:
a plurality of individual panels containing a pattern of apertures;
fluid baffle means raised from the top and/or bottom surfaces of the panels;
means spacing a plurality of the panels into a stacked arrangement with the panels subsequently parallel to each other;
characterized by the feature that the panels are molded from organic synthetic resin to form a homogeneous unitary structure, each panel containing a plurality of apertures disposed in a plurality of parallel rows, said fluid baffle means includes a plurality of rod-like elements projecting from a surface of the panels, some of the rod-like elements having a height less than the inter-panel spacing and some of the rod-like elements being longer and extending into and no further than an opposed panel, and a plurality of apertures in the opposed panel receive the ends of said longer rod-like elements for latching the panels together.

The plates can be separate, perforated units that are stacked in parallel relation. They are fixed in that relation by projections from the surfaces of the plates or side members such as bent or separate perforated side plates adhered to the side edges of the stacked plates.

The projections from the surface of the segments can be used as fluid baffles to disrupt large droplets, to create local turbulence, to increase contact between gas and liquid and to facilitate mass transfer. The projections can be polygonal tabs raised from the surface. The tabs can be diamond, rectangular or circular in shape. Thin cylindrical rod projections from the surface have been found to be very effective in facilitating mass transfer while providing an open volume of above 30% with very low pressure drop. The rod projections latch into apertures in the adjacent plate to provide stable separation between plates.

The stacked unit of plates can be formed from strips divided into plate segments. The plate segments on each side of a medial plate segment are folded toward the top surface of the medial plate segment and plate segments on the other side are folded toward the bottom surface of the medial plate segment. The strip may be provided with single or double fold lines to facilitate folding the strip material without bending or stressing the strip material.

The folded strip has a high degree of open space provided by perforations, at least about 30% of the strip is open space, preferably from 50% to 98% of the strip is open space. The baffle tabs attached to the strip provide increased surface for fluid contact. If the tabs are at an angle to the longitudinal axis of the rolled packing body they could be in the path of the flow liquid and will act to disrupt the liquid into smaller droplets. The tabs can be any shape such as curved, rectangular, triangular, square, etc. The tabs can be formed by cutting a partial perimeter of the tab from the sheet material leaving a live hinge. The live hinge is then bent to dispose the tab away from the sheet. A strip could also be molded with tabs raised from the surface of the strip. The raised tabs simultaneously form apertures in the sheet The tabs can also act as spacers between adjacent arcuate sections of the rolled strip. The tabs can face upwardly and/or downwardly. The tabs can be disposed normal to the surface of the sheet or at a lesser or greater angle, usually from 20 degrees to 160 degrees.

The strip is formed of organic synthetic resin, a material that has a flexible and bendable first state. After the bent strip is in its final configuration, the bent strip can be fired to cure the resin or convert the precursor to a final ceramic state.

The packing body of the invention can be reduced from much simpler starting materials. The molds are much cheaper and simpler than molds used to form prior high performance packing bodies. The method of the invention can be used to form packing bodies in complex shapes that can not be practically made by other techniques. The packing bodies of the invention can be produced at much lower costs.

These and many other features and attendant advantages of the invention will become apparent as the invention becomes better understood by reference to the following detailed description when considered in conjunction with the accompanying drawings.

### Brief Description of the Drawings

Figure 1 is a top view of an embodiment of a strip according to the invention containing a plurality of rod-like projections;
Figure 2 is a perspective view of a folded packing body formed from the strip of Figure 1.

### Detailed Description Of The Invention

The length and width of the strip are determined by the nominal diameter and height desired for the packing body 10, the size of segments and the surface area. Packing bodies generally have a diameter from 1 to 12 inches (25 to 305mm) and the height is about 1 to 10 inches (25 to 254mm). Usually the diameter to height ratio is at least 1. A packing body will generally have a packing factor from about 3 to 65 per foot (9.8 to 213 per metre) and a surface area from about 10 to 200 ft²/cu.ft.

The width of the strip at its widest dimension corresponds to the height of the packing body. Generally, the strip will be at least 5 inches (127mm) long up to 100 inches (2540mm) or more. The spacing between folded segments depends on the height of the baffle elements. Generally, the baffle elements have a height from 1/16 to 2.0 inches (1.6 to 51mm). The packing body will have at least 2 segments preferably from 3 to 30 segments. Random packing bodies are generally from 1 to 5 inches (25.4 to 127mm) in nominal diameter, have a height from 1 to 4 inches (25.4 to 101.6mm) and a baffle from 1/16 to 3/4 of an inch (1.6 to 19mm). The method of the invention could also be used to produce large molecular structured packing bodies in cubic or rectangular-shaped modules such as 1' x 1' x 1'; 2' x 1' x 1' or 3' x 1' x 1'. The structured modules are placed one module at a time into the tower until the tower is filled.

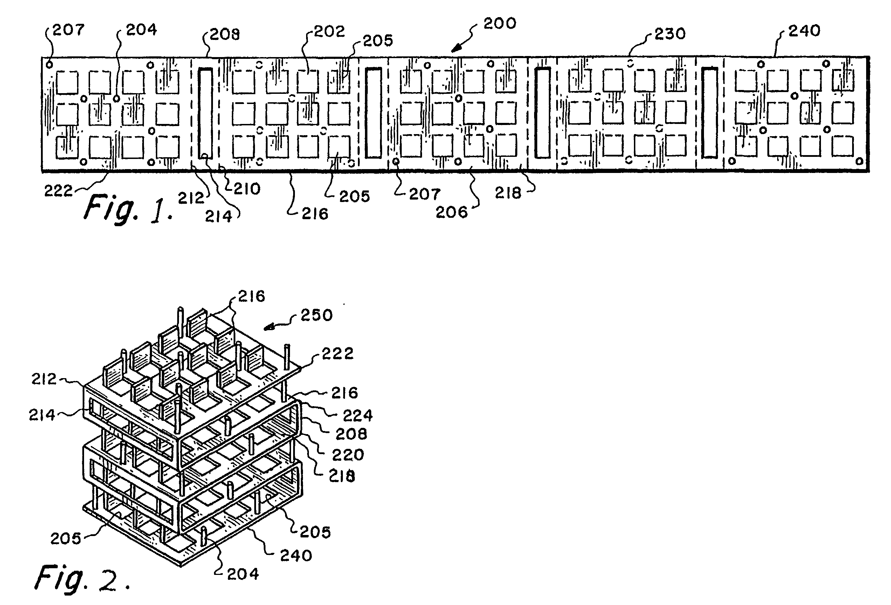

The improved strip shown in Figures 1 and 2 has a very open structure like a mesh or a screen.

An embodiment of a packing body according to the invention is shown in Figures 1 and 2. A strip 200 has a very open structure provided by apertures 202. A pattern of rod-like baffle elements 204 are raised from the surface 206 of the strip 200. Some of the elements 207 are longer and are adapted to enter an aperture 205 in an opposed segment and latch the segments together.

Each segment is separated from the adjacent segment by a band 208 containing a set of parallel score lines 210, 212. The band may also contain an elongated aperture 214. As shown in Figure 2 as the first front segment 216 is folded, the band 208 will fold along the live hinge 220 formed at score line 210 and the band 208 will be disposed at a right angle to the medial segment 218. The vertical band 208 will then fold along score line 212 at a right angle to the next front segment 222 to form a second live hinge 224. The front segment 222 is bent to be disposed parallel to the medial segment 218.

Some of the longer baffle elements 207 projecting from the surface of the medial segment 218 are snapped into the opposed apertures 205 in the folded segment 216. The rear segments 230 and 240 are then alternatively folded to form the packing body 250 shown in Figure 2.

The invention provides high performance packing bodies in complex shapes by simple, low cost fabrication techniques. The intricate shapes are defined in planer material readily formed by molding. The manufacture is competed by a simple folding step. By use of strips having different widths, lengths or thicknesses, packing bodies having complex shapes can be produced. Packing bodies of different sizes can be filled into a tower.

It is to be realized that only one preferred embodiment of the invention has been described and that numerous substitutions, modifications and alterations are permissible without departing from the scope of the invention as defined in the following claims.

## Claims

1. A packing body (200) for use in fluid contact comprises in combination:
a plurality of individual panels (216,218,222,230,240) containing a pattern of apertures (202,205),
fluid baffle means (204,207,216) raised from the top and/or bottom surfaces of the panels;
means (208) spacing a plurality of the panels into a stacked arrangement with the panels subsequently parallel to each other;
**characterized by** the feature that the panels are molded from organic synthetic resin to form a homogeneous unitary structure, each panel containing a plurality of apertures (202,205) disposed in a plurality of parallel rows, said fluid baffle means includes a plurality of rod-like elements (204,207) projecting from a surface of the panels, some of the rod-like elements having a height less than the inter-panel spacing and some of the rod-like elements being longer and extending into and no further than an opposed panel, and a plurality of apertures (205) in the opposed panel receive the ends of said longer rod-like elements for latching the panels together.

2. A packing body according to claim 1 in which said rod-like elements (204,207) are cylindrical.

3. A packing body according to claim 2 having at least 30% open space.

4. A method of forming a packing body according to claim 1 comprising the steps of:
molding a plurality of panels (216,218,222,230,240) from organic synthetic resin, each panel containing a pattern of first apertures (202) and fluid baffle means comprising a plurality of rod-like elements (204,207) projecting from a surface of the panels a portion of the rod-like elements (207) on each panel being longer than other of said rod-like elements (202) and each panel containing a plurality of second aperture (205) for receiving the ends of the longer rod-like elements; and
latching a plurality the panels into a stacked arrangement with the panels substantially parallel to each other by latching the ends of the longer rod-like elements into second apertures on an opposed panel.

5. A method according to claim 4 in which a portion of the rod-like elements on each panel are longer than other of said elements and adjacent panels are spaced by latching the longer elements to the adjacent panel.

## Patentansprüche

1. Füllkörper (200) zur Verwendung in Fluidkontakt, umfassend in Kombination:
eine Mehrzahl von einzelnen Tafeln (216, 218, 222, 230, 240), die ein Muster von Öffnungen (202, 205) enthalten,
Fluidprallflächeneinrichtungen (204, 207, 216), die sich aus der Oberseite und/oder Unterseite der Tafeln erheben;
Einrichtungen (208), die eine Mehrzahl der Tafeln im Abstand voneinander in eine gestapelte Anordnung bringen, wobei die Tafeln anschließend parallel zueinander sind;
**gekennzeichnet durch** das Merkmal, dass die Tafeln aus organischem synthetischem Harz geformt sind, um eine homogene einheitliche Struktur zu bilden, wobei jede Tafel eine Mehrzahl von Öffnungen (202, 205) enthält, die in einer Mehrzahl von parallelen Reihen angeordnet sind, die Fluidprallflächeneinrichtung eine Mehrzahl von stangenartigen Elementen (204, 207) enthält, die aus einer Oberfläche der Tafeln vorstehen, wobei einige der stangenartigen Elemente eine Höhe aufweisen, die kleiner ist als der Abstand zwischen Tafeln, und einige der stangenartigen Elemente länger sind und sich in eine gegenüberliegende Tafel hinein und nicht weiter als diese erstrecken, und eine Mehrzahl von Öffnungen (205) in der gegenüberliegenden Tafel die Enden der längeren stangenartigen Elemente aufnehmen, um die Tafeln miteinander zu verhaken.

2. Füllkörper nach Anspruch 1, bei dem die stangenartigen Elemente (204, 207) zylindrisch sind.

3. Füllkörper nach Anspruch 2, der mindestens 30% offenen Raum aufweist.

4. Verfahren zum Bilden eines Füllkörpers nach Anspruch 1, umfassend die Schritte:
Formen einer Mehrzahl von Tafeln (216, 218, 222, 230, 240) aus organischem synthetischem Harz, wobei jede Tafel ein Muster von ersten Öffnungen (202) und Fluidprallflächeneinrichtungen enthält, die eine Mehrzahl von stangenartigen Elementen (204, 207) umfassen, die aus einer Oberfläche der Tafeln vorstehen, wobei ein Teil der stangenartigen Elemente (207) auf jeder Tafel länger ist als andere von den stangenartigen Elementen (202), und wobei jede Tafel eine Mehrzahl von zweiten Öffnungen (205) enthält, um die Enden der längeren stangenartigen Elemente aufzunehmen; und
Verhaken einer Mehrzahl der Tafeln zu einer gestapelten Anordnung, wobei die Tafeln im Wesentlichen parallel zueinander sind, indem die Enden der längeren stangenartigen Elemente in zweite Öffnungen auf einer gegenüberliegenden Tafel gehakt werden.

5. Verfahren nach Anspruch 4, bei dem ein Teil der stangenartigen Elemente auf jeder Tafel länger ist als andere von den Elementen und benachbarte Tafeln beabstandet werden, indem die längeren Elemente mit der benachbarten Tafel verhakt werden.

## Revendications

1. Corps de garnissage (200) à utiliser en contact avec des fluides comprend, en combinaison :
plusieurs panneaux individuels (216, 218, 222, 230, 240) contenant un motif d'ouvertures (202, 205) ;
des moyens formant déflecteurs de fluide (204, 207, 216) s'élevant depuis les surfaces supérieure et/ou inférieure des panneaux ;
des moyens (208) écartant plusieurs des panneaux en un agencement empilé, de sorte que les panneaux soient essentiellement parallèles les uns aux autres ;
**caractérisé en ce que** les panneaux sont moulés à partir d'une résine synthétique organique pour former une structure unitaire homogène, chaque panneau contenant plusieurs ouvertures (202, 205) disposées en plusieurs rangées parallèles, lesdits moyens formant déflecteurs de fluide comprennent plusieurs éléments de type baguettes (204, 207) faisant saillie depuis une surface des panneaux, certains des éléments de type baguettes ayant une hauteur inférieure à l'écartement entre panneaux, et certains des éléments du type baguettes étant plus longs et s'étendant dans un panneau opposé, mais pas plus loin que ce dernier, et plusieurs ouvertures (205) aménagées dans le panneau opposé reçoivent les extrémités desdits plus longs éléments du type baguettes, pour verrouiller les panneaux ensemble.

2. Corps de garnissage selon la revendication 1, dans lequel lesdites éléments du type baguettes (204, 207) sont cylindriques,

3. Corps de garnissage selon la revendication 2, ayant au moins 30 % d'espaces ouverts.

4. Procédé de formation d'un corps de garnissage selon la revendication 1, comprenant les étapes qui consistent à :
mouler plusieurs panneaux (216, 218, 222, 230, 240) à partir d'une résine synthétique organique, chaque panneau contenant un motif de premières ouvertures (202) et des moyens formant déflecteurs de fluide, comprenant plusieurs éléments du type baguettes (204, 207) faisant saillie depuis la surface des panneaux, une partie des éléments du types baguettes (207) de chaque panneau étant plus longue qu'une autre partie des éléments du type baguettes (202), chaque panneau contenant plusieurs secondes ouvertures (205) destinées à recevoir les extrémités des plus longs éléments du type baguettes ; et
verrouiller plusieurs des panneaux en un agencement empilé, avec les panneaux essentiellement parallèles les uns aux autres, en verrouillant les extrémités des plus longs éléments du type baguettes dans les secondes ouvertures d'un panneau opposé.

5. Procédé selon la revendication 4, dans lequel une partie des éléments du type baguettes de chaque panneau est plus longue qu'une autre partie desdits éléments, et des panneaux contigus sont maintenus écartés par le verrouillage des plus longs éléments sur le panneau contigu.
